(19) Europäisches Patentamt / European Patent Office / Office européen des brevets

(11) **EP 2 203 523 B1**

(12) **EUROPEAN PATENT SPECIFICATION**

(45) Date of publication and mention
of the grant of the patent:
**07.08.2019 Bulletin 2019/32**

(21) Application number: **08803579.5**

(22) Date of filing: **03.09.2008**

(51) Int Cl.:
*C08L 101/00* (2006.01)     *C08K 9/00* (2006.01)
*C08K 3/22* (2006.01)

(86) International application number:
**PCT/EP2008/061608**

(87) International publication number:
**WO 2009/030703 (12.03.2009 Gazette 2009/11)**

(54) **CORE-SHELL NANOPARTICLES**

KERN-SCHALE-NANOTEILCHEN

NANOPARTICULES DE TYPE CORE-SHELL

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **05.09.2007 EP 07017371**

(43) Date of publication of application:
**07.07.2010 Bulletin 2010/27**

(73) Proprietor: **DSM IP Assets B.V.
6411 TE Heerlen (NL)**

(72) Inventors:
• **THIES, Jens Christoph
  NL-6245 ME Eijsden (NL)**
• **BUSKENS, Pascal Jozef Paul
  NL-6464 GL Kerkrade (NL)**

(74) Representative: **DSM Intellectual Property
P.O. Box 4
6100 AA Echt (NL)**

(56) References cited:
• **F. CARUSO, H. MÖHWALD: "Preparation and
Characterization of Ordered Nanoparticle and
Polymer Composite Multilayers on Colloids"
LANGMUIR, vol. 15, 1999, pages 8276-8281,
XP002476288**
• **PIEGARI A ET AL: "Thin film thickness
measurement: A comparison of various
techniques", THIN SOLID FILMS, ELSEVIER,
AMSTERDAM, NL, vol. 124, no. 3-4, 22 February
1985 (1985-02-22), pages 249-257, XP024593137,
ISSN: 0040-6090, DOI:
10.1016/0040-6090(85)90273-1 [retrieved on
1985-02-22]**

**Description**

The present invention is concerned with novel nanoparticles. More specifically, the invention relates to core-shell silica-polymer nanoparticles, methods for their preparation, and their potential uses.

There is growing academic and industrial interest in the synthesis and applications of nanoparticles, most particularly nanoparticles having a core-shell structure in view of their many potential uses such as delivery vehicles for active materials or in various types of coatings. Consequently, much prior art is devoted to the preparation of nano-sized particles of this type.

However, prior art methods for preparing these types of core-shell particles have proved difficult and unwieldy to use in anything other than lab scale. For example, the processes may be prohibitively expensive, lengthy, or may require non-ideal conditions. Or they may use hazardous reagents or produce hazardous byproducts. Some such problems are illustrated in the paper entitled 'Versatile Synthesis of Nanometer Sized Hollow Silica Spheres' (Miller et al., Chem. Commun., 2003, 1010-1011) which describes the production of silica coated zwitterionic latex nanoparticles by means of depositing silicic acid on functionalised polystyrene. The deposition takes 24hrs and is performed at ph 9.7. Unreacted silicic acid is removed by dialysis. The authors failed to form core-shell particles when they used anionic or cationic functionalised latexes.

It is apparent, therefore, that there is scope for the development of alternative nano-sized particles, which may be obtained using convenient reaction conditions.

According to a first aspect of the present invention, there is provided a composition comprising core-shell nanoparticles, wherein said nanoparticles comprise:

> (a) cationic core material comprising latex, the latex comprising a cationic polymer; and
> (b) shell material comprising metal oxide, wherein the metal oxide comprises silica;

wherein the average specific size g, wherein g is defined as ½ x (length + width), of the core-shell nanoparticles as measured using DLS or TEM is 300 nm or less and 10 nm or more.

In a particular embodiment of the invention there is provided a coating composition comprising core-shell nanoparticles, wherein said nanoparticles comprise:

> (a) cationic core material comprising latex; and
> (b) shell material comprising metal oxide, preferably silica,

wherein said nanoparticles have a rod or worm-like morphology.

According to a further aspect of the present disclosure, there is provided a thin-film coating comprising the present core-shell nanoparticles.

According to a further aspect of the present invention, there is provided a process for forming a coating, the process comprising:

> (a) applying a composition comprising the present core-shell nanoparticles to a substrate; and
> (b) curing said composition wherein the polymer core cationic core material is at least partially removed.

According to a further aspect of the present invention, there is provided a substrate at least partially coated with a coating comprising the present core-shell nanoparticles.

According to a further aspect of the present invention, there is provided an article comprising a substrate at least partially coated with a coating comprising the present core-shell nanoparticles.

According to a further aspect of the present disclosure, there is provided a thin-film coating comprising the present core-shell nanoparticles. As used herein, "thin-film" refers to coatings having an average thickness of 1000nm or less, more commonly 300nm or less.

According to a further aspect of the present disclosure, there is provided a composition adapted to facilitate controlled delivery of at least one active agent into a system, said composition comprising the present core-shell nanoparticles, wherein said composition is adapted to provide said controlled delivery in response to controlled changes in the pH of said system.

Preferred examples of said active agent include, for example, drugs, dyes and catalysts, and suitable systems into which they might be delivered include such diverse examples as human and animal bodies, coatings and chemical reactors.

According to a further aspect of the present invention, there is provided an optical coating, especially thin-film optical coatings, comprising the present core-shell nanoparticles. As used herein, the term "optical coatings" refers to coatings with an optical function as major functionality. Examples of optical coatings include those designed for anti-reflective, anti-glare, anti-dazzle, anti-static, EM-control (e.g. UV-control, solar-control, IR-control, RF-control etc.) functionalities. Preferably the present coatings have an anti-reflective functionality. More preferably the present coatings are such that, when measured for one coated side at a wavelength between 425 and 675 nm (the visible light region), the minimum reflection is about 2% or less, preferably about 1.5% or less, more preferably about 1% or less.

As used herein, the term "nanoparticles" refers to particles whose primary average particle size is less then 300 nm, preferably less than 200nm, more preferably less than 100nm. Particle size can be measured by Dynamic Light Scattering (DLS) and Transmission Electron Microscopy (TEM).

As used herein, the term "core-shell" refers to particles comprising core material that comprises polymeric material (for example, homopolymers, random co-polymers, block-copolymers etc.) and shell material that comprises metal oxide (for example, silica, alumina, titania, tin oxide etc.).

As used herein, the term "binder" refers to a substance that can physically or chemically cross-link the nanoparticles and, preferably, also link the particles and substrate.

As used herein, the term "by weight of the solid fraction" refers to the weight percentage after removal of all solvent including water.

Throughout the description and claims of this specification, the words "comprise" and "contain" and variations of the words, for example "comprising" and "comprises", means "including but not limited to", and is not intended to (and does not) exclude other moieties, additives, components, integers or steps.

Features, integers, characteristics, compounds, chemical moieties or groups described in conjunction with a particular aspect, embodiment or example of the invention are to be understood to be applicable to any other aspect, embodiment or example described herein unless incompatible therewith.

The nanoparticles for use in the present invention have an average specific size g where g = ½ x (length + width) of about 300 nm or less. More preferably the particles have an average size of about 200 nm or less. Even more preferably the particles have an average size of about 100 nm or less. The particles have an average size of about 10 nm or more.

Preferably the average specific size of the core is 1 nm or more, more preferably 3 nm or more, even more preferably 6 nm or more. Preferably the average specific size of the core is 100 nm or less, more preferably 80 nm or less, even more preferably 70 nm or less.

Preferably the shell is at least 1 nm thick, more preferably at least 5 nm, even more preferably at least 10 nm. Preferably the shell is 75 nm thick or less, more preferably 50 nm or less, even more preferably 25 nm or less.

The nanoparticles may comprise a mixture of different types, sizes, and shapes of particles. However, preferably the nanoparticles are relatively monodispersed, that is of a reasonably uniform size and shape.

In one embodiment the particles used herein are non-spherical such as, preferably, rod-like or worm-like particles. In another preferred embodiment the particles are substantially spherical.

In a preferred embodiment the void fraction is preferably from about 5% to about 90%, more preferably from about 10% to about 70%, even more preferably from about 25% to about 50%. The void fraction (x) may be calculated according to the following equation:

$$x = (4 \pi r_a^3/3) \div (4 \pi r_b^3/3) \times 100$$

wherein $r_a$ is the radius of the core and $r_b$ is the total radius.

The nanoparticles for use herein comprise cationic core material which comprises latex. Preferably the core comprises about 30% or more, more preferably about 50% or more, even more preferably about 70% or more, even more preferably still about 90% or more, by weight, of latex.

As used herein, the term 'latex' refers to stabilized suspension of polymeric particles. Preferably the suspension is an emulsion. Preferably the latex is cationic. The cationic group may be incorporated in to the polymer or may be added in any other form such as, for example, by the addition of a cationic surfactant. Preferably the cationic groups are at least partially bound to the polymer. Preferably the cationic groups are incorporated into the polymer during polymerisation.

Preferably the average size of the polymeric particles is in the range 1-300nm, more preferably 10-200nm, even more preferably 30-100nm. Preferably the pH range of the suspension is from 3 to 7, more preferably from 3.5 to 6.

Preferably the latex comprises polymer and cationic surfactant. Preferably, the surfactant comprises ammonium surfactant.

Any suitable polymer may be used such as, for example, homopolymers, random co-polymers, block-copolymers, diblock-copolymers, triblock-copolymers, and combinations thereof.

The latex preferably comprises an aqueous cationic vinyl polymer.

Preferably, the latex comprises a polymer comprising styrene monomers, (meth)acrylic monomers, copolymers or combinations thereof.

In the present invention it may be required to remove some or all of the core material from the particle. This may be achieved in any suitable manner at any suitable point in the production process. Preferred methods include, for example, thermodegradation, photodegradation, solvent washing, electron-beam, laser, catalytic decomposition, and combinations thereof. Preferably the core is removed after the nanoparticles has been added to a coating or a composition that is used in forming a coating. Therefore, the scope of the present invention encompasses optical coatings comprising core-shell nanoparticles where the core is present and where the core has been partially or fully removed.

In a preferred embodiment the core comprises thermo-degradable or thermo-labile latex. Preferred are those which become labile at 600°C or less, more preferably 450°C or less, even more preferably 350°C or less. Preferably the latexes become labile at room temperature or higher, more preferably 150°C or higher, even more preferably 250°C or higher.

The nanoparticles of the present invention comprise shell material which comprises metal oxide, wherein the metal oxide comprises silica. Any suitable metal oxide may be used but negatively charged species are preferred. Preferred are sols derived from metal alkoxides. Preferably the metal oxide is selected from titanium dioxide, zirconium oxide, antimony doped tin oxide, tin oxide, aluminium oxide, silicon dioxide, and combinations thereof.

The shell comprises silica. Preferably the shell comprises at least 90%, by weight, of silica.

Preferably, said shell material comprises silica which is deposited on said core material from at least one silica precursor. Optionally, said at least one silica precursor may comprise an inorganic silicate, for example an alkali metal silicate, such as sodium silicate. However, preferred silica precursors comprise organosilicate compounds, especially alkyl silicates such as tetramethyl orthosilicate or tetraethyl orthosilicate. Most preferably, said silica precursor comprises tetramethyl orthosilicate.

Deposition of shell material may be carried out in any suitable manner. For example, the cationic core may be simply treated with suitable silica precursors under mild conditions.

Preferably the deposition is carried out at a pH of from 1 to 9, more preferably from 2 to 8, even more preferably from 3 to 7.

The invention further provides a process for producing core-shell nanoparticles, said process comprising:

(a) providing a cationic core material comprising latex, the latex comprising a cationic polymer; and
(b) coating said core with a shell material comprising metal oxide, wherein the shell material is added at a pH of from 3 to 4.5,

wherein the metal oxide comprises silica and the core shell nanoparticles have an average specific size g, wherein g is defined as ½ x (length + width), of 300 nm or less and 10 nm or more as measured using DLS or TEM.

In certain preferred embodiments the pH range for the deposition reaction is between 3.5 and 4.5. However, the optimal pH range is somewhat dependent on the reagents used.

More than one layer metal oxide may be deposited in the shell. In certain embodiments a layer of one metal oxide (e.g. silica) will be deposited followed by a layer of a different metal oxide (e.g. titania). This provides different properties to the nanoparticles.

The invention will now be further illustrated, though without in any way limiting the scope of the disclosure, by reference to the following examples.

Caruso and Möhwald (Langmuir 1999, 15, 8276-8281) describe Preparation and Characterization of Ordered Nanoparticle and Polymer Composite Multilayers on Colloids.

EXAMPLES

Example 1

NeoCryl XK-30 latex (35.28 g) was diluted with water (80.0 g) and subsequently treated with tetramethoxysilane (41.2 g, addition rate 28 g·h$^{-1}$). After complete addition of TMOS, the resulting mixture had a pH of 4.00 and was then stirred at room temperature for an additional 90 minutes. The mixture was then poured into ethanol (867.0 g) under vigorous stirring with a stirring bar. The properties of the resultant particles were then assessed.

| | |
|---|---|
| pH after dilution with ethanol: | 5.68 |
| Particle size latex in water (determined by DLS): | 86 nm |
| Particle size core-shell particle water (determined by DLS): | 108 nm |
| Particle size core-shell in ethanol (determined by DLS): | 147 nm |
| Polydispersity: | < 0.1 |
| Isoelectric point (IEP) : | 4-5 |

(continued)

| | |
|---|---|
| Particle size core-shell after drying (determined by TEM): | 75 nm |
| Shell thickness after drying (determined by TEM): | 13 nm |

Nitric acid was then added to a pH of 3.58. The particle size was stable at 115nm for at least two weeks.

Example 2

NeoCryl XK-30 latex (35.28 g) was diluted with water (80.0 g), treated with a 10 wt-% solution of acetic acid in water (15.0 g) and subsequently treated with tetraethoxysilane (56.5 g, addition rate 19 g·h$^{-1}$). After complete addition of TEOS, the mixture was stirred at room temperature for an additional 90 minutes. Then, the mixture was poured into ethanol (867.0 g) under vigorous stirring with a stirring bar.

| | |
|---|---|
| Particle size core-shell particle water (determined by DLS): | 100 nm |

**Claims**

1. A composition comprising core-shell nanoparticles, wherein said nanoparticles comprise:

    (a) cationic core material comprising latex, the latex comprising a cationic polymer; and
    (b) shell material comprising metal oxide, wherein the metal oxide comprises silica;

    wherein the average specific size g, wherein g is defined as ½ x (length + width), of the core-shell nanoparticles as measured using DLS or TEM is 300 nm or less and 10 nm or more.

2. The composition according to claim 1, wherein the average specific size g of the core-shell nanoparticles is 200 nm or less and 10 nm or more as measured using DLS or TEM.

3. The composition according to claim 1 or 2, wherein the average specific size g of the core-shell nanoparticles is 100 nm or less and 10 nm or more as measured using DLS or TEM.

4. The composition according to any one of claims 1 to 3, wherein the shell material comprises one layer of silica.

5. The composition according to any one of claims 1 to 4, wherein the polymer is selected from homopolymers, random co-polymers, block-copolymers, diblock-copolymers, triblock-copolymers, and combinations thereof.

6. The composition according to any one of claims 1 to 5, wherein the latex comprises a cationic surfactant.

7. The composition according to any one of claims 1 to 6, wherein the latex comprises an aqueous cationic vinyl polymer.

8. The composition according to any preceding claim, wherein the latex comprises a polymer comprising styrene monomers, (meth)acrylic monomers, copolymers or combinations thereof.

9. A substrate at least partially coated with a composition according to any preceding claim.

10. A process for producing core-shell nanoparticles, said process comprising:

    (a) providing a cationic core material comprising latex, the latex comprising a cationic polymer; and
    (b) coating said core with a shell material comprising metal oxide, wherein the shell material is added at a pH of from 3 to 4.5, wherein the metal oxide comprises silica and the core shell nanoparticles have an average specific size g, wherein g is defined as ½ x (length + width), of 300 nm or less and 10 nm or more as measured using DLS or TEM.

11. The process according to claim 10, wherein in step (b) the shell material is added at a pH between 3.5 and 4.5 .

**12.** The process according to claim 10 or 11, wherein the core shell nanoparticles have an average specific size g of 200 nm or less and 10 nm or more as measured using DLS or TEM.

**13.** The process according to any one of claims 10 to 12, wherein the metal oxide is in the form of sols derived from metal alkoxides.

**14.** The process according to any one of claims 10 to 13, wherein metal oxide is added in the form of silica precursor comprising tetramethyl orthosilicate, tetraethyl orthosilicate, or combinations thereof.

**15.** The process according to claim 14, wherein silica precursor comprises tetramethyl orthosilicate.

**16.** The process according to any one of claims 10 to 15, wherein the latex is defined according to any one of claims 1, 5 to 8.

**17.** The process according to any one of claims 10 to 16, wherein the shell material is deposited in one layer.

**18.** A process for manufacturing a coating, the process comprising the steps:

a) applying a composition as defined in any one of claims 1 to 8 to a substrate; and
b) curing said composition wherein the polymer core cationic core material is at least partially removed.

**19.** The process according to claim 18, wherein in step b) the removing is done via thermodegradation, photodegradation, solvent washing, electron-beam, laser, catalytic decomposition, or combinations thereof.

**20.** The process according to claim 18 or 19, wherein the coating is an optical coating, having anti-reflective functionality such that, when measured for one coated side at a wavelength between 425 and 675 nm, the minimum reflection is 2% or less.

**21.** The process according to claim 20, wherein the minimum reflection is 1.5% or less, preferably 1% or less.

**22.** An article comprising the substrate according to claim 9.

**Patentansprüche**

**1.** Zusammensetzung, umfassend Kern-Schale-Nanoteilchen, wobei die Nanoteilchen umfassen:

(a) kationisches Kernmaterial, umfassend Latex, wobei das Latex ein kationisches Polymer umfasst; und
(b) Schalenmaterial, umfassend Metalloxid, wobei das Metalloxid Siliciumdioxid umfasst;

wobei die mittlere spezifische Größe g 300 nm oder weniger und 10 nm oder mehr beträgt, gemessen durch DLS oder TEM, wobei g als ½ x (Länge + Breite) der Kern-Schale-Nanoteilchen definiert ist.

**2.** Zusammensetzung nach Anspruch 1, wobei die spezifische Größe g der Kern-Schale-Nanoteilchen 200 nm oder weniger und 10 nm oder mehr beträgt, gemessen durch DLS oder TEM.

**3.** Zusammensetzung nach Anspruch 1 oder 2, wobei die spezifische Größe g der Kern-Schale-Nanoteilchen 100 nm oder weniger und 10 nm oder mehr beträgt, gemessen durch DLS oder TEM.

**4.** Zusammensetzung nach einem der Ansprüche 1 bis 3, wobei das Schalenmaterial eine Schicht Siliciumdioxid umfasst.

**5.** Zusammensetzung nach einem der Ansprüche 1 bis 4, wobei das Polymer aus Homopolymeren, statistischen Copolymeren, Block-Copolymeren, Diblock-Copolymeren, Triblock-Copolymeren und Kombinationen davon ausgewählt ist.

**6.** Zusammensetzung nach einem der Ansprüche 1 bis 5, wobei das Latex ein kationisches Tensid umfasst.

**7.** Zusammensetzung nach einem der Ansprüche 1 bis 6, wobei das Latex ein wässriges kationisches Vinylpolymer umfasst.

**8.** Zusammensetzung nach einem der vorhergehenden Ansprüche, wobei das Latex ein Polymer umfasst, welches Styrol-Monomere, (Meth)acryl-Monomere, Copolymere oder Kombinationen davon umfasst.

**9.** Substrat, zumindest teilweise beschichtet mit einer Zusammensetzung nach einem der vorhergehenden Ansprüche.

**10.** Verfahren zur Herstellung von Kern-Schale-Nanoteilchen, wobei das Verfahren umfasst:

(a) Bereitstellen eines kationischen Kernmaterials, umfassend Latex, wobei das Latex ein kationisches Polymer umfasst; und
(b) Beschichten des Kerns mit einem Schalenmaterial, umfassend Metalloxid, wobei das Schalenmaterial bei einem pH-Wert von 3 bis 4,5 zugegeben wird, wobei das Metalloxid Siliciumdioxid umfasst und die Kern-Schale-Nanoteilchen eine mittlere spezifische Größe g aufweisen, wobei g 300 nm oder weniger und 10 nm oder mehr beträgt, gemessen durch DLS oder TEM, wobei g als ½ x (Länge + Breite) definiert ist.

**11.** Verfahren nach Anspruch 10, wobei im Schritt (b) das Schalenmaterial bei einem pH-Wert von 3,5 bis 4,5 zugegeben wird.

**12.** Verfahren nach Anspruch 10 oder 11, wobei die Kern-Schale-Nanoteilchen eine mittlere spezifische Größe g von 200 nm oder weniger und 10 nm oder mehr aufweisen, gemessen durch DLS oder TEM.

**13.** Verfahren nach einem der Ansprüche 10 bis 12, wobei das Metalloxid in der Form von Solen vorliegt, die aus Metallalkoholaten herrühren.

**14.** Verfahren nach einem der Ansprüche 10 bis 13, wobei das Metalloxid in der Form einer Siliciumdioxid-Vorstufe zugegeben wird, welche Tetramethylorthosilicat, Tetraethylorthosilicat oder Kombinationen davon umfasst.

**15.** Verfahren nach Anspruch 14, wobei die Siliciumdioxid-Vorstufe Tetramethylorthosilicat umfasst.

**16.** Verfahren nach einem der Ansprüche 10 bis 15, wobei das Latex nach einem der Ansprüche 1, 5 bis 8 definiert ist.

**17.** Verfahren nach einem der Ansprüche 10 bis 16, wobei das Schalenmaterial in einer Schicht abgeschieden wird.

**18.** Verfahren zur Herstellung einer Beschichtung, wobei das Verfahren die Schritte umfasst:

a) Aufbringen einer Zusammensetzung nach einem der Ansprüche 1 bis 8 auf ein Substrat; und
b) Härten der Zusammensetzung, wobei das kationische Kernmaterial des Polymerkerns zumindest teilweise entfernt wird.

**19.** Verfahren nach Anspruch 18, wobei im Schritt b) das Entfernen durch thermische Zersetzung, Photo-Zersetzung, Waschen mit Lösungsmittel, Elektronenstrahl, Laser, katalytische Zersetzung oder Kombinationen davon erfolgt.

**20.** Verfahren nach Anspruch 18 oder 19, wobei die Beschichtung eine optische Beschichtung mit Antireflexionsfunktionalität ist, so dass, gemessen für eine beschichtete Seite bei einer Wellenlänge von 425 nm bis 675 nm, die minimale Reflexion 2 % oder weniger beträgt.

**21.** Verfahren nach Anspruch 20, wobei die minimale Reflexion 1,5 % oder weniger, vorzugsweise 1 % oder weniger beträgt.

**22.** Gegenstand, welcher das Substrat nach Anspruch 9 umfasst.

**Revendications**

**1.** Composition comprenant des nanoparticules de type noyau-enveloppe, dans laquelle lesdites nanoparticules comprennent :

(a) un matériau de noyau cationique comprenant un latex, le latex comprenant un polymère cationique ; et

(b) un matériau d'enveloppe comprenant un oxyde métallique, où l'oxyde métallique comprend de la silice ;

dans laquelle la taille spécifique moyenne g, où g est défini comme étant ½ x (longueur + largeur), des nanoparticules de type noyau-enveloppe telle que mesurée par DLS ou MET est de 300 nm ou moins et 10 nm ou plus.

2. Composition selon la revendication 1, dans laquelle la taille spécifique moyenne g des nanoparticules de type noyau-enveloppe est de 200 nm ou moins et 10 nm ou plus telle que mesurée par DLS ou MET.

3. Composition selon la revendication 1 ou 2, dans laquelle la taille spécifique moyenne g des nanoparticules de type noyau-enveloppe est de 100 nm ou moins et 10 nm ou plus telle que mesurée par DLS ou MET.

4. Composition selon l'une quelconque des revendications 1 à 3, dans laquelle le matériau d'enveloppe comprend une couche de silice.

5. Composition selon l'une quelconque des revendications 1 à 4, dans laquelle le polymère est choisi parmi des homopolymères, des copolymères statistiques, des copolymères séquencés, des copolymères diblocs, des copolymères triblocs, et des combinaisons de ceux-ci.

6. Composition selon l'une quelconque des revendications 1 à 5, dans laquelle le latex comprend un tensioactif cationique.

7. Composition selon l'une quelconque des revendications 1 à 6, dans laquelle le latex comprend un polymère vinylique cationique aqueux.

8. Composition selon l'une quelconque des revendications précédentes, dans laquelle le latex comprend un polymère comprenant des monomères de styrène, des monomères (méth)acryliques, des copolymères ou des combinaisons de ceux-ci.

9. Substrat au moins partiellement revêtu avec une composition selon l'une quelconque des revendications précédentes.

10. Procédé de production de nanoparticules de type noyau-enveloppe, ledit procédé comprenant :

(a) la fourniture d'un matériau de noyau cationique comprenant un latex, le latex comprenant un polymère cationique ; et

(b) le revêtement dudit noyau avec un matériau d'enveloppe comprenant un oxyde métallique, dans lequel le matériau d'enveloppe est ajouté à un pH de 3 à 4,5, dans lequel l'oxyde métallique comprend de la silice et les nanoparticules de type noyau-enveloppe ont une taille spécifique moyenne g, où g est défini comme étant ½ x (longueur + largeur) de 300 nm ou moins et 10 nm ou plus telle que mesurée par DLS ou MET.

11. Procédé selon la revendication 10, dans lequel, dans l'étape (b), le matériau d'enveloppe est ajouté à un pH compris entre 3,5 et 4,5.

12. Procédé selon la revendication 10 ou 11, dans lequel les nanoparticules de type noyau-enveloppe ont une taille spécifique moyenne g de 200 nm ou moins et 10 nm ou plus telle que mesurée par DLS ou MET.

13. Procédé selon l'une quelconque des revendications 10 à 12, dans lequel l'oxyde métallique est sous la forme de sols dérivés d'alcoxydes métalliques.

14. Procédé selon l'une quelconque des revendications 10 à 13, dans lequel l'oxyde métallique est ajouté sous la forme de précurseur de silice comprenant de l'orthosilicate de tétraméthyle, l'orthosilicate de tétraéthyle, ou des combinaisons de ceux-ci.

15. Procédé selon la revendication 14, dans lequel le précurseur de silice comprend de l'orthosilicate de tétraméthyle.

16. Procédé selon l'une quelconque des revendications 10 à 15, dans lequel le latex est défini selon l'une quelconque des revendications 1, 5 à 8.

**17.** Procédé selon l'une quelconque des revendications 10 à 16, dans lequel le matériau d'enveloppe est déposé dans une couche.

**18.** Procédé de fabrication d'un revêtement, le procédé comprenant les étapes de :

a) application d'une composition telle que définie dans l'une quelconque des revendications 1 à 8 sur un substrat ; et

b) durcissement de ladite composition, dans lequel le matériau de noyau cationique de noyau de polymère est au moins partiellement enlevé.

**19.** Procédé selon la revendication 18, dans lequel, dans l'étape b), le retrait est effectué par thermodégradation, photodégradation, lavage par solvant, faisceau d'électrons, laser, décomposition catalytique, ou des combinaisons de ceux-ci.

**20.** Procédé selon la revendication 18 ou 19, dans lequel le revêtement est un revêtement optique, ayant une fonctionnalité antireflet de sorte que, lorsqu'elle est mesurée pour un côté revêtu à une longueur d'onde comprise entre 425 et 675 nm, la réflexion minimale est de 2 % ou moins.

**21.** Procédé selon la revendication 20, dans lequel la réflexion minimale est de 1,5 % ou moins, de préférence de 1 % ou moins.

**22.** Article comprenant le substrat selon la revendication 9.

# EP 2 203 523 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MILLER et al.** Versatile Synthesis of Nanometer Sized Hollow Silica Spheres. *Chem. Commun.,* 2003, 1010-1011

- **CARUSO ; MÖHWALD.** *Langmuir,* 1999, vol. 15, 8276-8281